# EUROPEAN PATENT SPECIFICATION

(11) **EP 4 359 560 B1**
(45) Date of publication and mention of the grant of the patent: **07.05.2025**
(21) Application number: 22741372.1
(22) Date of filing: 20.06.2022
(51) Int. Cl.: C12Q 1/6816, G01N 30/88

(54) **MULTIRESIDUAL METHOD FOR DETECTING AND/OR QUANTIFYING AMINO ACIDS, ORGANIC ACIDS AND/OR MODIFIED NUCLEOTIDES BY MEANS OF HILIC CHROMATOGRAPHIC SEPARATION AND MS/MS**
MULTIRESIDUALES VERFAHREN ZUM NACHWEIS UND/ODER ZUR QUANTIFIZIERUNG VON AMINOSÄUREN, ORGANISCHEN SÄUREN UND/ODER MODIFIZIERTEN NUKLEOTIDEN MITTELS HILIC CHROMATOGRAPHISCHER TRENNUNG UND MS/MS
PROCEDE MULTI-RESIDUEL DE DETECTION ET/OU DE QUANTIFICATION D'AMINOACIDES, D'ACIDES ORGANIQUES ET/OU DE NUCLEOTIDES MODIFIES AU MOYEN D'UNE SEPARATION CHROMATOGRAPHIQUE HILIC ET DE MS/MS

(30) Priority: 22.06.2021 IT 202100016364
(43) Date of publication of application: 01.05.2024
(73) Proprietor: Crescendo Care S.r.l., 20124 Milano (IT)
(72) Inventor: CHIARA, Francesco, 20124 Milano (IT); ROGGERO, Simona, 20124 Milano (IT)
(74) Representative: Studio Torta S.p.A.
(86) International application number: PCT/IB2022/055714
(87) International publication number: WO 2022/269465

(56) References cited:
- WO-A1-2018/117881
- WO-A2-2015/109263
- CN-A- 107 843 672
- CN-A- 111 323 499
- DOMÍNGUEZ-ÁLVAREZ JAVIER ET AL: "Determination of nucleosides and nucleotides in food samples by using liquid chromatography and capillary electrophoresis", TRAC TRENDS IN ANALYTICAL CHEMISTRY, ELSEVIER, AMSTERDAM, NL, vol. 92, 18 April 2017 (2017-04-18), pages 12 - 31, XP085065194, ISSN: 0165-9936, DOI: 10.1016/J.TRAC.2017.04.005
- BÖTTCHER CHRISTOPH ET AL: "Comprehensive metabolite profiling of onion bulbs (Allium cepa) using liquid chromatography coupled with electrospray ionization quadrupole time-of-flight mass spectrometry", METABOLOMICS, SPRINGER US, NEW YORK, vol. 13, no. 4, 17 February 2017 (2017-02-17), pages 1 - 15, XP036189416, ISSN: 1573-3882, [retrieved on 20170217], DOI: 10.1007/S11306-017-1175-1

## Description

### Cross-Reference to Related Applications

This Patent Application claims priority from Italian Patent Application No. 102021000016364 filed on June 22, 2021.

### Technical Field of the Invention

The present invention relates to a multiresidual method for detecting and/or quantifying at least one amino acid or derivative thereof, and/or at least one organic acid, and/or at least one modified nucleotide, in a sample of biological fluid or circulating cells.

### State of the art

The possibility of detecting and quantifying target metabolites as useful tests for the differential diagnosis of multiple diseases, in particular metabolic and, more specifically, hereditary diseases, is gaining in importance. Compliance with the UNI EN ISO/IEC 17025:2018 standard is also fundamental.

To date, there are no methods on the market, nor described in the literature, that allow the simultaneous measurement of analytes such as amino acids, organic acids and modified nucleotides in panels, in particular as they occur naturally in the sample in their natural oxidation/reduction state. The diagnostic trend for these metabolites is increasing, due to the greater screening offer, for the increasingly clear correlations of these analytes with specific diseases, and thus also the recognised clinical impact and demand for multiple and comprehensive marker panels.

Some methods, with a similar diagnostic objective to that of the present invention, have been described. However, these methods differ technically and in any case they are not as effective (accuracy, type of measurable analytes, and detection times).

A first example is that reported in Sutton TR et al, Redox Biology (2018); 16:359-380, wherein the objective is to determine the redox metabolism linked to thiol compounds. However, the method is limited to identifying thiols.

Another example is that reported in Behringer S et al., Metabolites (2019); 9, 235, wherein the metabolic cycle of methionine is investigated. As only amino acids that are part of the methionine metabolic cycle are analysed, no steps are required to overcome the oxidation problem that other metabolites other than methionine have. However, the analytes that can be measured by this method are very limited.

CN110542726 describes a method HILIC-UHPLC-MS/MS for determining the content of some analytes in human cell samples to evaluate small cell lung cancers. However, this method only allows a limited number of amino acids to be identified.

CN107843672 discloses a method for detecting an amino acid in serum using high-performance liquid chromatography and tandem mass spectrometry. An isotopic amino acid is added to a serum sample for use as an internal standard. Subsequently, the amino acid in the sample is extracted by a liquid-liquid extraction method, the amino acid is separated by HILIC and a method based on a standard-internal standard curve is used for analysis by tandem mass spectrometry.

Other multiresidual measurement methods for the same analytes object of the patent, which are nowadays available in the laboratory today, involve numerous passages, long times and limited accuracy.

None of the above methods, however, allows the analysis of a sufficiently broad panel of analytes comprising amino acids, organic acids and modified nucleotides and is applicable to different types of sample (biological fluid and cells) .

The gold standard used in the laboratory for sulphur amino acids is for example HPLC with fluorimetric detection and post-column derivatisation with ninhydrin which requires at least 2.5 working hours.

### Subject and Summary of the Invention

It is therefore an aim of the present invention to provide a method for analysing a broad panel of analytes, including amino acids, organic acids and modified nucleotides, in particular as they occur naturally in the sample in their natural oxidation/reduction state, that works on both biological liquid and cells, and that is efficient, reliable and fast.

This aim is achieved by the present invention as it relates to a method as defined in Claim 1.

### Brief Description of the Drawings

Figures 1A and 1B represent chromatograms indicating the homocysteine dosage according to the invention with reference to a preferred embodiment.
Figures 2A and 2B represent chromatograms indicating the cysteine dosage according to the invention with reference to a preferred embodiment.
Figure 3 represents a chromatogram indicating a panel of concurrently dosed analytes.
Figures 4A and 4B represent chromatograms indicating the glutathione (GSH) dosage according to the invention with reference to a preferred embodiment.
Figures 5A and 5B represent chromatograms indicating the glutathione disulfide (GSSG) dosage according to the invention with reference to a preferred embodiment.
Figure 6 represents a chromatogram indicating the N-acetylcysteine dosage according to the invention with reference to a preferred embodiment.
Figure 7 represents a chromatogram indicating the S-adenosylhomocysteine dosage according to the invention with reference to a preferred embodiment.
Figure 8 represents a chromatogram indicating the lipoic acid dosage according to the invention with reference to a preferred embodiment.
Figure 9 represents a chromatogram indicating the S-adenosylmethionine dosage according to the invention with reference to a preferred embodiment.
Figure 10 represents a chromatogram indicating the metanephrine dosage according to the invention with reference to a preferred embodiment.
Figure 11 represents a diagram of the method according to a preferred embodiment of the invention.
Figure 12 represents a chromatogram indicating the cysteine NEM dosage according to the invention with reference to a preferred embodiment wherein the extraction mixture is based on acetonitrile, methanol and hydrochloric acid (0.05 normal).
Figure 13 represents a chromatogram indicating the N-acetylcysteine dosage according to the invention with reference to a preferred embodiment wherein the extraction mixture is based on acetonitrile, methanol and hydrochloric acid (0.05 normal).
Figure 14 represents a chromatogram indicating the homocysteine dosage according to the invention with reference to a preferred embodiment wherein the extraction mixture is based on methanol and dimethyl sulfoxide (0.05% v/v) .

### Detailed Description of Preferred Embodiments of the Invention

According to the present invention there is provided a multiresidual method for detecting and/or quantifying at least one amino acid or derivative thereof, at least one organic acid, and/or at least one modified nucleotide, in a sample of biological liquid or circulating cells, comprising three steps (a), b) and c)) in sequence.

"Multiresidual" means an effective method for detecting panels of multiple analytes at low concentrations. In particular, all analytes can be run in one single chromatographic run.

Preferably, at least one amino acid or derivative thereof, at least one organic acid or derivative thereof, and at least one modified nucleotide or derivative thereof are detected and/or quantified. In particular, these molecules are detected and/or quantified as they occur naturally in the sample in their natural oxidation/reduction state.

The at least one amino acid can be a polar, non-polar, acidic, basic, neutral, sulphur or special amino acid, or a dipeptide or tripeptide derivative. The at least one amino acid or derivative thereof is preferably selected from the group consisting of phosphoserine, threonine, serine, glutamine, glycine, alanine, cysteine, valine, cystine, methionine, methionine sulfone, methionine sulfoxide, formylmethionine, cystathionine, isoleucine, leucine, norleucine, tyrosine, β-alanine, phenylalanine, homocysteine, homocystine, lysine, ornithine, histidine, 1-methylhistidine, 3-methylhistidine, anserine, arginine, proline, citrulline, glutathione, glutathione disulphide, cysteine sulphide, N-acetylcysteine, taurine, Selenium-methionine, phosphoethanolamine, homocitrulline, sarcosine, asparagine, carnosine, hydroxyproline, hydroxylisine, homocysteine lactone, cysteine homocysteine, homoglutathione, aminoethylecysteine, tryptophan, selenocysteine.

In a preferred embodiment, the at least one organic acid is a short chain C2-C8 organic acid. The at least one organic acid is preferably selected from the group consisting of cysteic acid, pyruvic acid, lactic acid, lipoic acid, α-aminobutyric acid, γ-aminobutyric acid, glutamic acid, aspartic acid, aminoadipic acid, argininosuccinic acid, sulfhydric acid.

The at least one modified nucleotide is preferably selected from the group consisting of s-adenosylmethionine, s-adenosylhomocysteine and acetylCoA.

In a preferred embodiment, the method may detect at least one amino acid and/or at least one organic acid and/or at least one modified nucleotide, and/or other biomolecules (including catecholamines, metanephrines, purine biosynthesis metabolites pyrimidine biosynthesis metabolites, kinurenines), and/or drugs (including NSAIDs such as acetylsalicylic acid, ketorolac, cox 1 and cox2 inhibitors, antiarrhythmics such as lidocaine, tocainide, phleicanide, and antibiotics such as clavulanic acid, tazobactam, vaborbactam).

The first step of the method (step a)) envisages treating the sample with an extraction mixture at room temperature, preferably refrigerated at a temperature lower than -20°C comprising i) a mixture of one or more organic solvents having final polarity index between 3 and 6, ii) a strong acid in an amount sufficient for the extraction mixture to have a normality from 0.005 to 0.025 N or a weak acid with ka in the range between 3.5 x 10-7 and 7.0 x 10-3 with a final concentration in the extraction mixture from 5 to 30 mM.

Optimal results are obtained with a refrigerated extraction mixture at a temperature lower than -20. However, the method provides reliable results even if the extraction mixture is used at room temperature.

The extraction mixture used in the method of invention comprises acetonitrile, dichloromethane and formic acid; or acetonitrile and hydrochloric acid; or acetone and formic acid; or methanol and formic acid; or acetonitrile and formic acid; acetonitrile, methanol and hydrochloric acid.

The extraction mixture preferably comprises acetonitrile (69% v/v), dichloromethane (30% v/v) and formic acid (1% v/v); or acetonitrile and hydrochloric acid (0.015 normal); or acetone (99.5% v/v) and formic acid (0.5% v/v); or methanol (99% v/v) and formic acid (1% v/v); or acetonitrile and formic acid (0.2% v/v); acetonitrile, methanol and hydrochloric acid (0.05 normal).

Step a) is preferably preceded by a step of treating the sample with a solution of water, a low-concentration organic solvent and a substance of the group of N-substituted Imides with at least one unsaturation in alpha position with respect to one of the acyl groups, of organic acids with C4 to C10 chain.

The substance of the group of N-substituted Imides is preferably N-ethylmaleimide (NEM) or N-methylmaleimide (NMM), even more preferably N-ethylmaleimide (NEM).

In one embodiment, the sample is a biological liquid, e.g., plasma, urine, saliva, sweat, CSF, amniotic fluid, or whole blood. The biological liquid is preferably plasma.

In an alternative embodiment, the sample consists of circulating cells and the circulating cells are preferably PBMC (peripheral blood mononuclear cells) monocytes. In this case, prior to step a) the cells are separated by a cell separation method known to the person skilled in the art. The cells are then lysed with a solution of water, methanol and N-ethylmaleimide (NEM) and placed at -80° to complete the lysis.

The extraction mixture preferably comprises acetonitrile (69% v/v), dichloromethane (30% v/v) and formic acid (1% v/v); or acetonitrile and hydrochloric acid (0.015 normal); or acetone (99.5% v/v) and formic acid (0.5% v/v); or methanol (99% v/v) and formic acid (1% v/v); or acetonitrile and formic acid (0.2% v/v); or acetonitrile, methanol and hydrochloric acid (0.05 normal).

The extraction mixture is refrigerated:
- from -95°C to -70°C if the extraction mixture is preserved for a time longer than or equal to 6 months;
- from -25°C to -15°C if the extraction mixture is preserved for a time from 2 months to 6 months;
- from -30°C to -20°C if the extraction mixture is prepared for immediate use.

More particularly, a volume between 50 µl and 200 µl of sample (plasma or lysed cell solution as described above) is dispensed with a precision pipette into an Eppendorf type centrifuge cuvette with minimum capacity of 250 µl; 5 µl to 20 µl of the internal standard solution and subsequently 100 µl to 800 µl of extraction mixture are added to them. This is followed by stirring on vortex for 1min and by centrifugation in the range of 3500 to 5000 RPM for 10 min.

The second step (step b)) envisages performing a hydrophilic interaction liquid chromatography (HILIC) on the sample treated in step a). The hydrophilic interaction liquid chromatography (HILIC) is performed by means of a step A and a step B between which there is a pH gradient from 2.5 to 7.5 and an ionic strength gradient from 15 mmolar to 200 mmolar such as to allow the separation of the analytes with a single stationary step.

An example of a column for HILIC pack is VT-50 2D Shodex L150 x i.d.2.0mm.

Preferably, step A comprises an organic solvent having a final polarity index between 4 and 7 and water in a volume ratio such that the final polarity index of the mixture is between 3 and 11 taking into account the addition of an acid-base pair with an ion-pair function so as to buffer the entire solution to a pH between 2.5 and 6.

Preferably, step B comprises an organic solvent having a final polarity index between 4 and 7 and water in a volume ratio such that the final polarity index of the mixture is between 7 and 10 taking into account the addition of an acid-base pair with an ion-pair function so as to buffer the entire solution to a pH between 2.5 and 6.

More preferably, the hydrophilic interaction liquid chromatography (HILIC) is performed by means of a step A with water, preferably R = 18 MΩ 100%v/v and NH₄COOH, preferably 10 mM followed by a step B with acetonitrile, preferably MS grade 95% v/v and water, preferably R = 18 MΩ 5% v/v and NH₄COOH, preferably 10 mM.

Specifically, a suitable volume in the range of 50 µl to 400 µl of the supernatant is diluted in an appropriate ratio (1:2 to 1:20) with "step A" and transferred into vial microinsert and injected into HPLC-MS/MS or UHPLC-MS/MS. The injection sequence envisages in the following order:
- three injections of solution prepared in 1:1 volume proportions of the organic solvent used for the preparation of "step B" and water;
- the standard solutions prepared in the matrix;
- the samples.

The flow is between 0.2 and 0.6 ml/min
The temperature is between 30°C and 35°C
Elution is in gradient.

The optimal conditions using the above-described steps and a HILIC-based stationary step are:
- Initial conditioning
- Time between 0 and 5 minutes
- Step B between 70 and 95% v/v
- Linear gradient with negative slope in "step A" between 5 and 15% v/v per minute-1 up to a time between 8 and 13 minutes and "step A" between 35 and 5% v/V. A reconditioning step is then envisaged in a time range between 2 and 5 minutes for restoring the initial running conditions.

In particular, an example of optimal conditions is shown in the following table:

| time/min | Step B |
|---|---|
| 0.01 | 100 |
| 1.50 | 100 |
| 6.50 | 5 |
| 8.50 | 5 |
| 9.00 | 100 |
| 11.00 | 100 |

Quantification takes place using the external standard method after normalising the areas of the samples with the areas of the respective internal standards (Aminoethylcysteine and Omoglutathione).

The third step (step c)) envisages performing an analysis by tandem mass spectrometry on the sample obtained in step b) for detecting and/or quantifying the at least one amino acid or derivative thereof, the at least one organic acid, and/or the at least one modified nucleotide.

The analysis by tandem mass spectrometry is carried out with the following parameters Q1 and Q3:

| **Substance** | **Q1** | **Q3** |
|---|---|---|
| Alanine | 44.1 | 72.1 |
| Aminoadipic acid | 98.1 | 144.1 |
| Aminobutyric acid | 41.1 | 58.1 |
| Aminoisobutyric acid | 57.1 | 86.1 |
| Hydroxyproline | 68.1 | 86.1 |
| Phosphoserine | 70.1 | 88.1 |
| Phosphoethanolamine | 44.1 | |
| Arginine | 70.1 | 116.1 |
| Hystidine | 110.1 | 83.1 |
| Lysine | 84.1 | 130.1 |
| Aspartic acid | 74.1 | 88.1 |
| Asparagine | 74.1 | 87.1 |
| Glutamine | 84.2 | 130.1 |
| Tryptophan | 146.1 | 188.1 |
| Argininosuccinic acid | 70.1 | 116.1 |
| Anserine | 109.1 | |
| Carnosine | 110.1 | 210.1 |
| Ethanolamine | 44.1 | |
| Hydroxylisine | 82.2 | 128.1 |
| Ornitine | 70.1 | 116.1 |
| Phenylalanine | 120.1 | 103.1 |
| Proline | 70.1 | 43 |
| Leucine | 86.1 | 43.1 |
| Isoleucine | 86.1 | 69.1 |
| Alloisoleucine | 69.1 | 86.1 |
| Homocitrulline | 127.1 | 173.1 |
| Citrulline | 70.1 | 159.1 |
| Sarcosine | 44.1 | |
| Threonine | 74.1 | 102.1 |
| Tyrosine | 136.1 | 165.1 |
| Valine | 72.1 | 55.1 |
| Lipoic acid | 205 | 171 |
| | 205 | 127.1 |
| | 205 | 93 |
| Methionine sulfoxide | 164 | 63 |
| | 164 | 100 |
| | 164 | 149 |
| | 166 | 74 |
| | 166 | 102 |
| | 166 | 149 |
| Cysteine_NEM | 247 | 158 |
| | 247 | 184 |
| | 247 | 230 |
| | 247 | 212 |
| N-acetylcysteine_NEM | 289 | 243 |
| | 289 | 201 |
| | 289 | 158.2 |
| Methionine SO2 | 180 | 79 |
| | 180 | 64 |
| Cysteic acid | 168 | 151 |
| | 168 | 81 |
| | 168 | 71 |
| Glycine | 74 | 45 |
| | 74 | 58 |
| Glutamic acid | 146 | 102 |
| | 146 | 128 |
| Methionine | 150 | 133 |
| | 150 | 104 |
| S-Adenosilhomocysteine | 383.2 | 134 |
| | 383.2 | 188 |
| | 383.2 | 248 |
| | 385 | 136 |
| | 385 | 250 |
| | 385 | 88 |
| Pyruvic Acid | 87 | 43 |
| | 87 | 59 |
| Taurine | 124 | 80 |
| | 124 | 107 |
| Glutathione disulfide | 613 | 355 |
| | 613 | 484 |
| | 613 | 409 |
| | 613 | 538 |
| | 613 | 595 |
| | 611.3 | 306 |
| | 611.3 | 272.3 |
| | 611.3 | 254 |
| | 611.3 | 338 |
| | 611.3 | 143 |
| Glutathione_NEM | 431.1 | 306.3 |
| | 431.1 | 253.8 |
| | 431.1 | 288.2 |
| | 431.1 | 179 |
| | 431.1 | 272.2 |
| | 431.1 | 304.3 |
| | 431.1 | 286.9 |
| | 431.1 | 358.2 |
| | 431.1 | 201 |
| | 431.1 | 211.8 |
| Cysteine Sulfate | 200.3 | 136.1 |
| | 200.3 | 81 |
| | 200.3 | 74 |
| | 200.3 | 120 |
| N-formylmethionine | 176 | 128.1 |
| | 176 | 98 |
| | 176 | 84 |
| S-Adenosilmethionine | 399.3 | 298.1 |
| | 399.3 | 250.2 |
| | 399.3 | 264 |
| Serine | 103.9 | 74 |
| | 103.9 | 56 |
| | 103.9 | 42 |
| Cystathionine | 221 | 134 |
| | 221 | 120 |
| | 221 | 86 |
| Homocysteine-NEM | 261.1 | 215 |
| | 261.1 | 244 |
| Aminoethylcysteine | 165 | 148 |
| | 165 | 120 |
| Homocysteine | 267 | 132 |
| | 267 | 72 |
| | 267 | 115 |
| | 267 | 88 |
| Homoglutathione_NEM | 447.6 | 319 |
| | 447.6 | 301.3 |
| | 447.6 | 200.8 |
| | 447.6 | 358.1 |
| | 445.5 | 157.1 |
| | 445.5 | 286.3 |
| | 445.5 | 174 |
| | 445.5 | 196 |
| | 445.5 | 268.3 |
| | 445.5 | 301.9 |
| Selenomethionine | 197.1 | 95 |
| | 197.1 | 107 |
| | 197.1 | 122 |
| Cysteine | 241.2 | 120 |
| | 241.2 | 122 |
| | 241.2 | 152 |
| | 241.2 | 195 |
| | 241.2 | 223 |
| Homocysteine NMM | 247.1 | 215 |
| | 247.1 | 244 |

Each NEM-analyte or NMM-analyte corresponds to the form of the analyte as it occurs naturally in the sample in the natural oxidation/reduction state and unmodified by external factors (e.g. oxygenation by contact with ambient air), measured thanks to the addition in whole blood of an N-substituted Imide with at least one unsaturation in alpha position with respect to one of the acyl functions, of organic acids with C4 to C10 chain, for example NEM or NMM.

More preferably, an HPLC-(ESI)MS/MS system or a U-PLC-(ESI)MS/MS system is used. Alternatively, MS/MS or MS/TOF or even TOF/TOF or IT-TOF or Q-TOF detection systems.

Preferably, the system must have these characteristics: it must be capable of supporting at least 400 bar Pmax; the detection system must be provided with polarity switching not greater than 10 ms; the HPLC system must be provided with pumps with a minimum of two lines; the column housing must be thermostat-controlled; and the autosampler must be suitable for the injection volumes envisaged by the method (1 - 10 µl).

The method according to the invention is particularly useful in the diagnosis of metabolic diseases, in particular of a broad spectrum of acute conditions such as acute encephalopathy, and chronic conditions such as the metabolism of the pterines.

The method according to the invention can be used in diagnostic laboratories as an alternative instrument to those existing in ion exchange chromatography (for example, with Biocrom instruments).

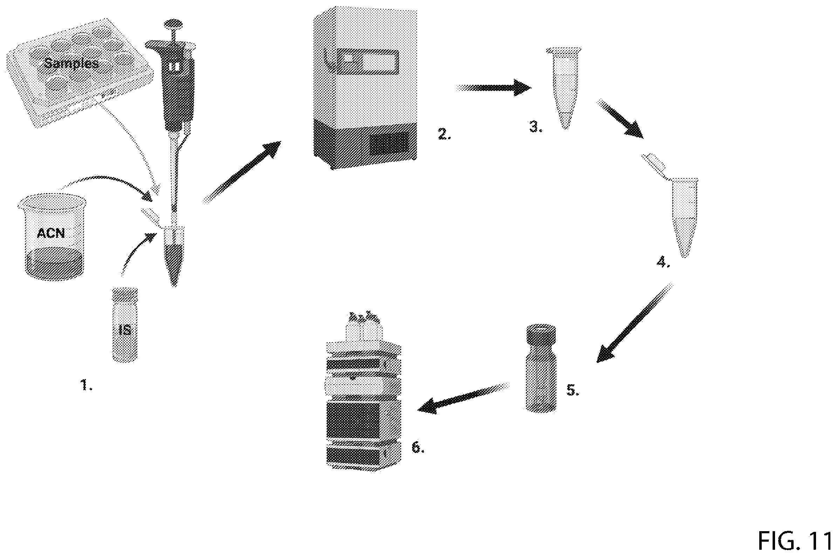

Figure 11 shows an image of the subsequent steps of the method:
1: mixing the internal standard with the sample, adding the cold solvent. ACN = acetonitrile; IS = internal standard.
2: freezing for 10 minutes.
3: centrifugation at 4000 RPM for 5 minutes.
4: separation of the supernatant.
5: transfer of the supernatant into vial by chromatographic injection.
6: HPLC/MSMS injection.

### Example 1-homocysteine measurement

The homocysteine content in a sample of human plasma was measured using the method according to the preferred embodiment described above.

The extraction mixture used was acetonitrile and 0.015 N hydrochloric acid.

It should be noted that to date there is no measurement standard for homocysteine as such, but only for homocysteine disulfide.

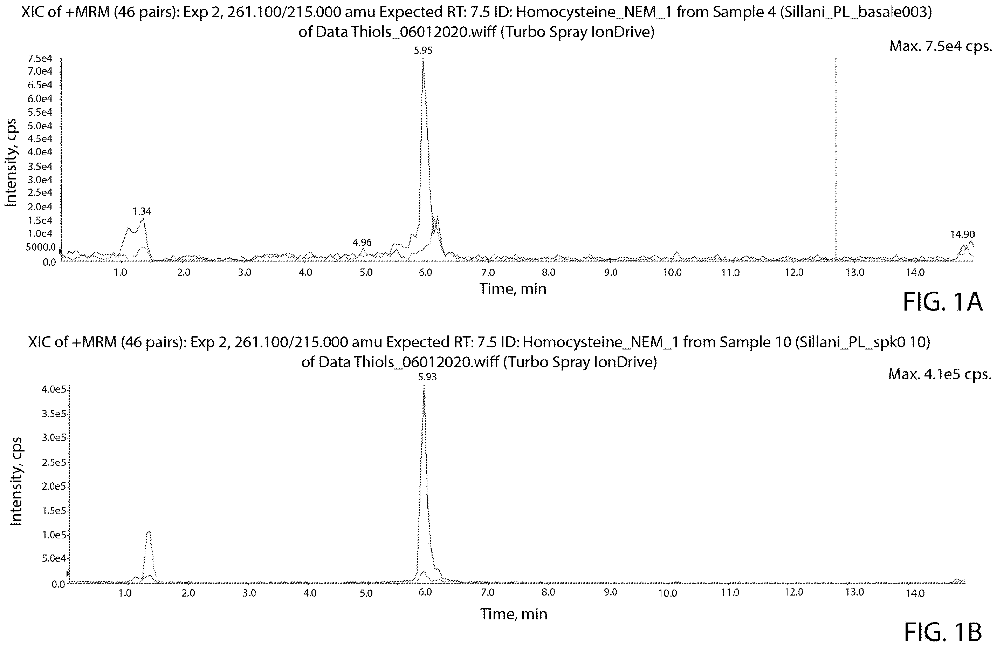

The results are shown in Figure 1A and 1B.

### Example 2 - cysteine measurement

The cysteine content in a sample of human plasma was measured using the method according to the preferred embodiment described above.

The extraction mixture used was methanol (99% v/v) and formic acid (1% v/v).

It should be noted that there is to date no method used in routine hospital practice that allows the determination of the exact amount of cysteine naturally present in the sample analysed.

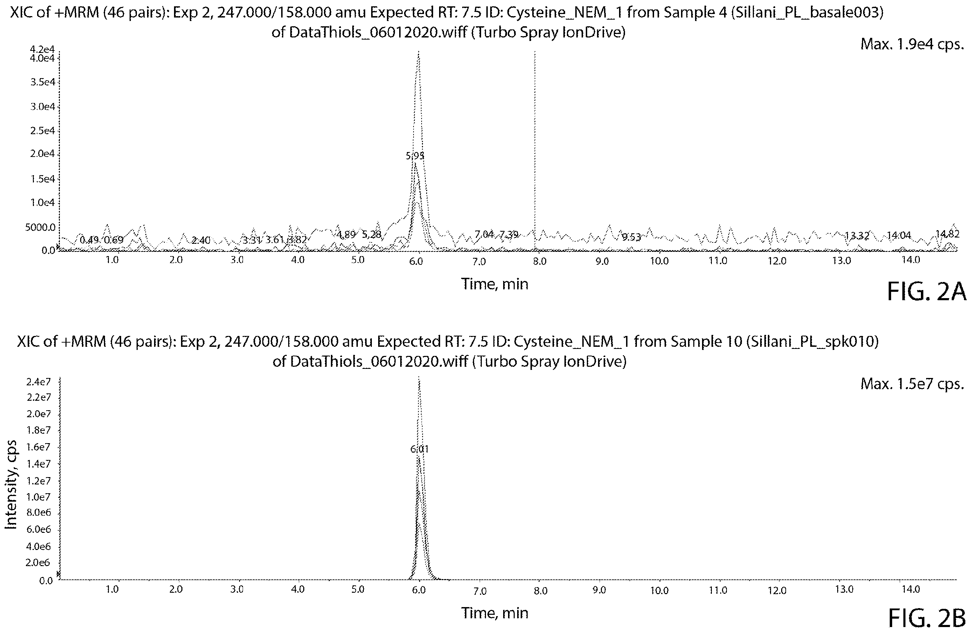

The results are shown in Figure 2A and 2B.

### Example 3 - measurement of a panel of analytes

The standard mix content 250.0 ppb was measured: (from left to right) methionine, methionine sulphone, cysteic acid, S-adenosylhomocysteine, glutathione-NEM, N-acetylcysteine, glutathione disulphide, using the method according to the preferred embodiment described above in a human plasma sample. The extraction mixture used was acetonitrile (69% v/v), dichloromethane (30% v/v) and formic acid (1% v/v).

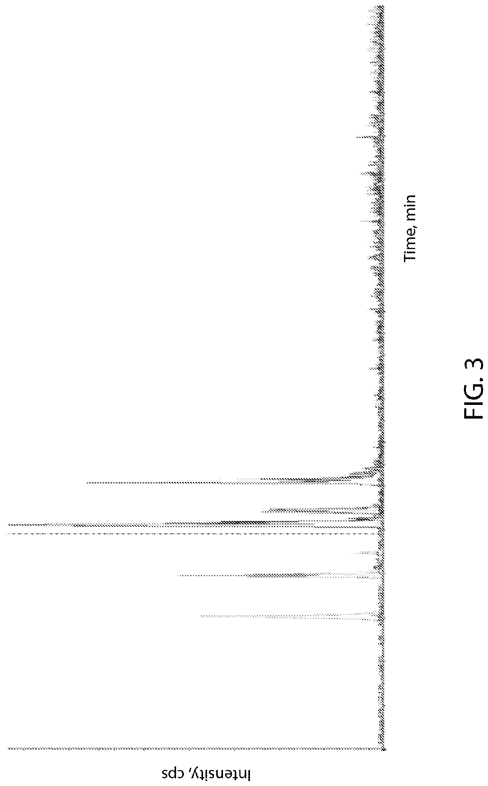

The chromatogram indicating the panel of concurrently dosed analytes is represented in Figure 3. For the dosed analytes, apart from the first (methionine) and the last (glutathione disulphide), no reference standard exists today.

### Example 4 - glutathione measurement (GSH)

The glutathione content in a sample of human plasma was measured using the method according to the preferred embodiment described above. The extraction mixture used was acetonitrile (69% v/v), dichloromethane (30% v/v) and formic acid (1% v/v).

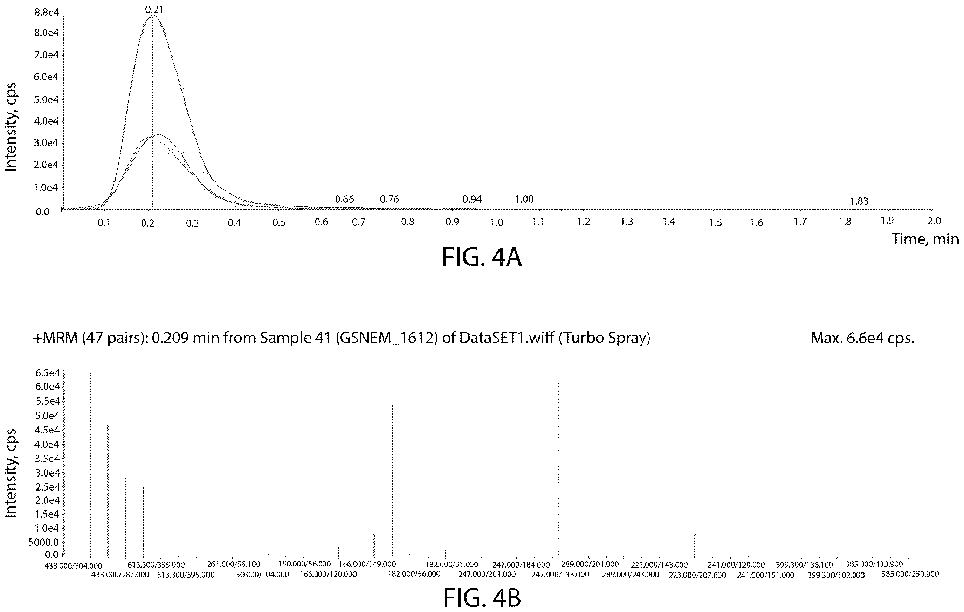

The results are shown in Figure 4A and 4B.

### Example 5 - glutathione disulphide measurement (GSSG)

The glutathione disulphide content in a sample of human plasma was measured using the method according to the preferred embodiment described above. The extraction mixture used was acetone (99.5% v/v) and formic acid (0.5% v/v).

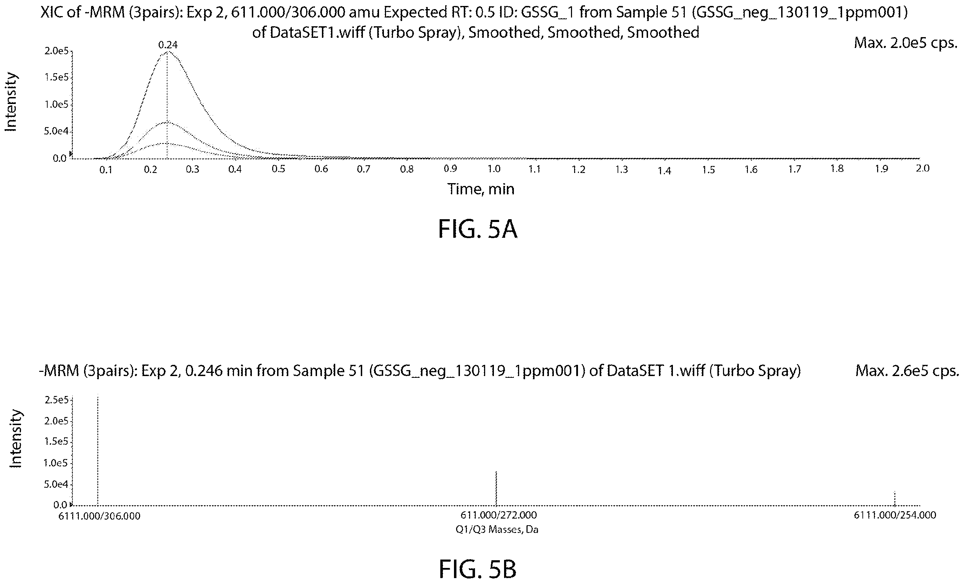

The results are shown in Figure 5A and 5B.

### Example 6 - N-acetylcysteine measurement (NAC)

The N-acetylcysteine content in a sample of human plasma was measured using the method according to the preferred embodiment described above. The extraction mixture used was acetonitrile (69% v/v), dichloromethane (30% v/v) and formic acid (1% v/v).

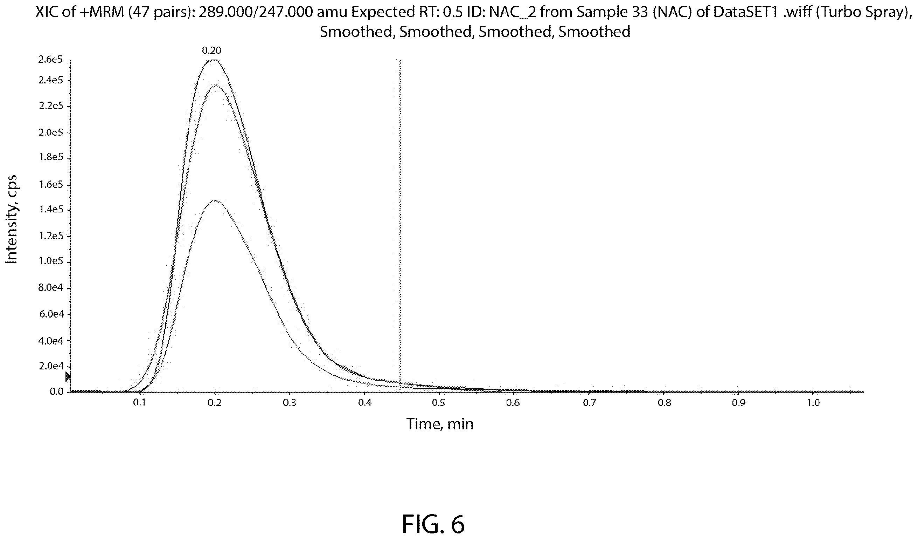

The results are shown in Figure 6.

### Example 7 - S-adenosylhomocysteine measurement (NAC)

The S-adenosylhomocysteine content in a sample of human plasma was measured using the method according to the preferred embodiment described above. The extraction mixture used was acetone (99.5% v/v) and formic acid (0.5% v/v).

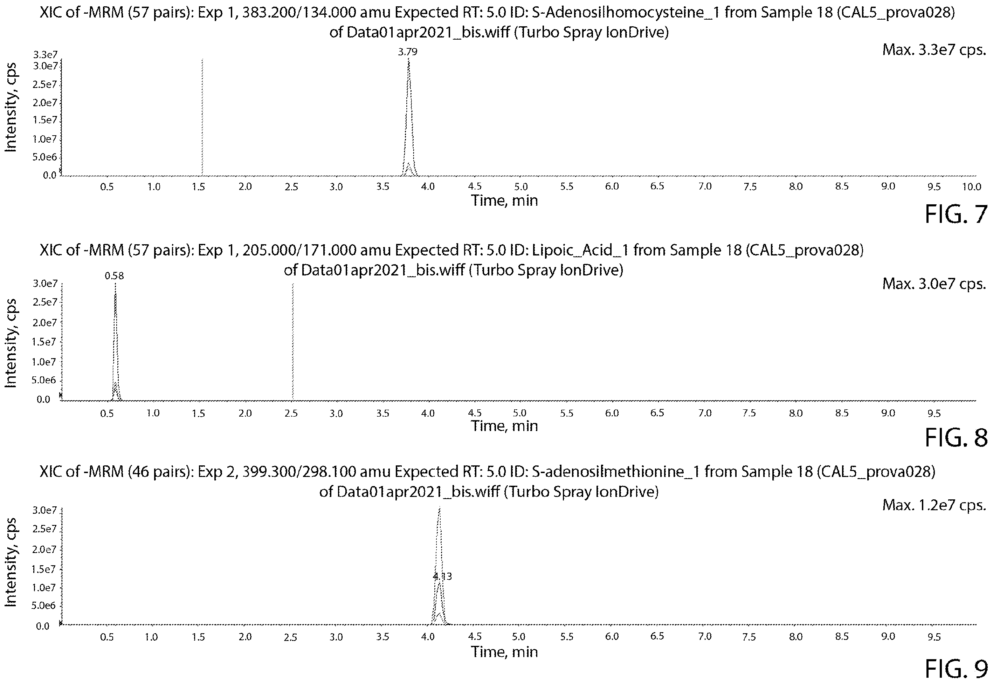

The results are shown in Figure 7.

### Example 8 - lipoic acid measurement

The lipoic acid content in a sample of human plasma was measured using the method according to the preferred embodiment described above. The extraction mixture used was acetone (99.5% v/v) and formic acid (0.5% v/v).

The results are shown in Figure 8.

### Example 9 - S-adenosylmethionine measurement

The S-adenosylmethionine content in a sample of human plasma was measured using the method according to the preferred embodiment described above. The extraction mixture used was methanol (99% v/v) and formic acid (1% v/v).

The results are shown in Figure 9.

### Example 10 - metanephrine measurement

The metanephrine content in a sample of human plasma was measured using the method according to the preferred embodiment described above. The extraction mixture used was methanol (99% v/v) and formic acid (1% v/v).

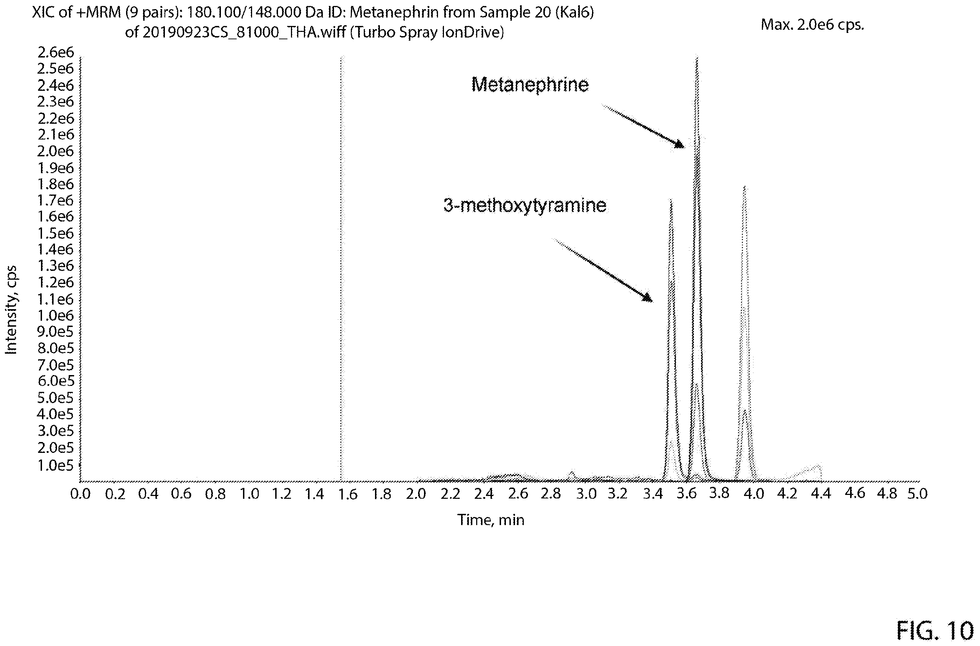

The results are shown in Figure 10.

### Example 11 - NEM cysteine measurement

The NEM cysteine content in a sample of human plasma was measured using the method according to the preferred embodiment described above. The extraction mixture used was acetonitrile, methanol and hydrochloric acid (0.05 normal).

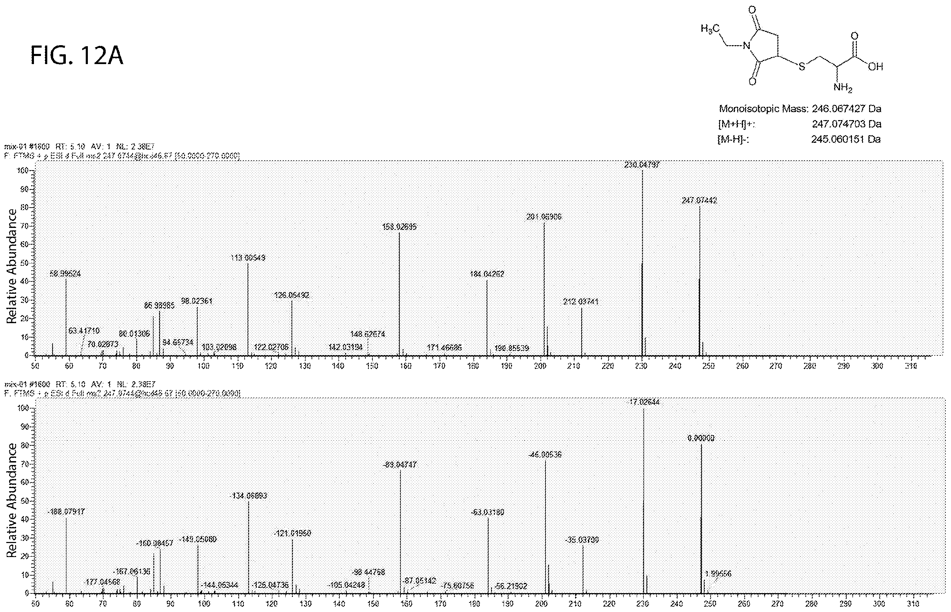

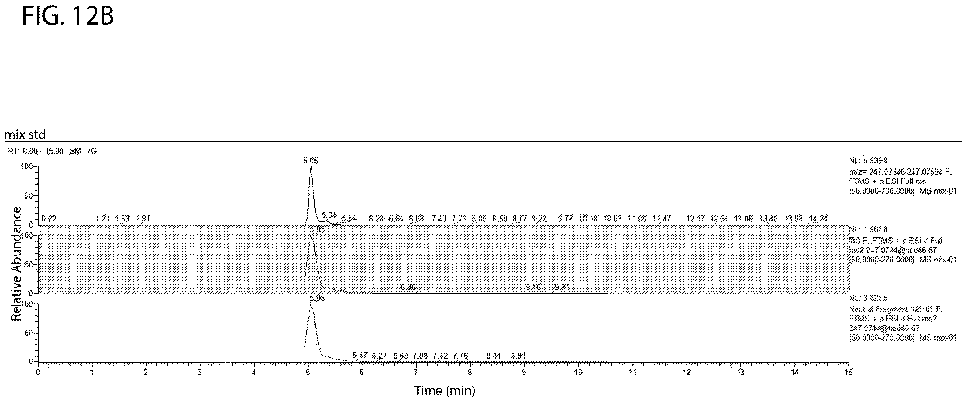

The results are shown in Figure 12.

### Example 12 - N-acetylcysteine measurement

The N-acetylcysteine content in a sample of human plasma was measured using the method according to the preferred embodiment described above. The extraction mixture used was acetonitrile, methanol and hydrochloric acid (0.05 normal).

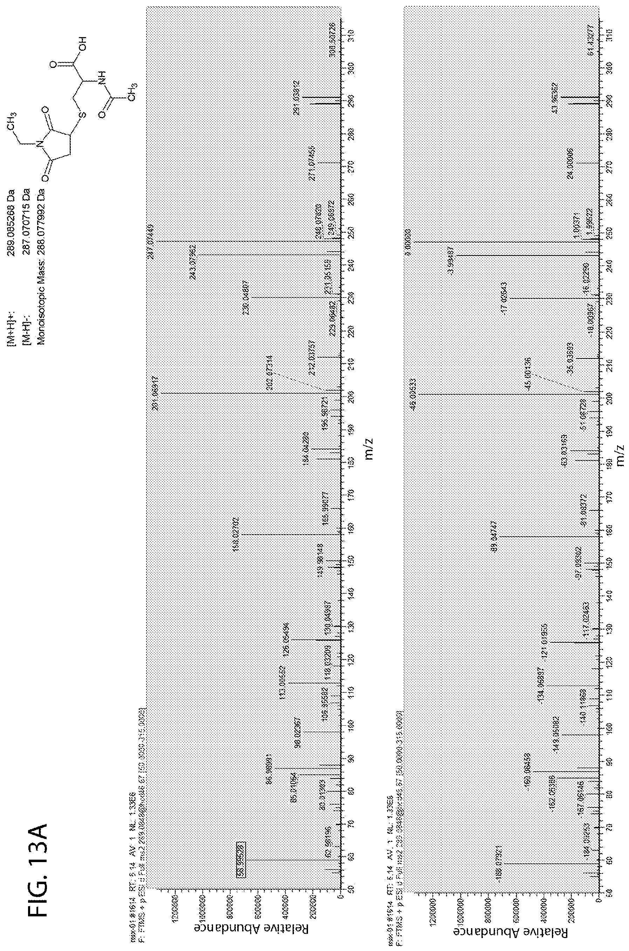

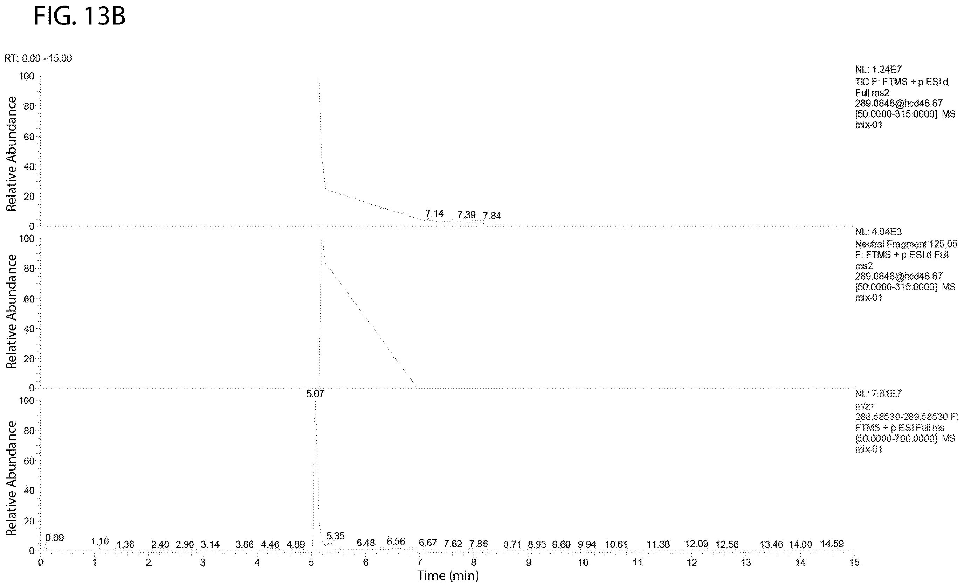

The results are shown in Figure 13.

### Example 13 - homocysteine measurement

The homocysteine content in a sample of human plasma was measured using the method according to the preferred embodiment described above. The extraction mixture used was methanol and dimethyl sulfoxide (0.05% v/v).

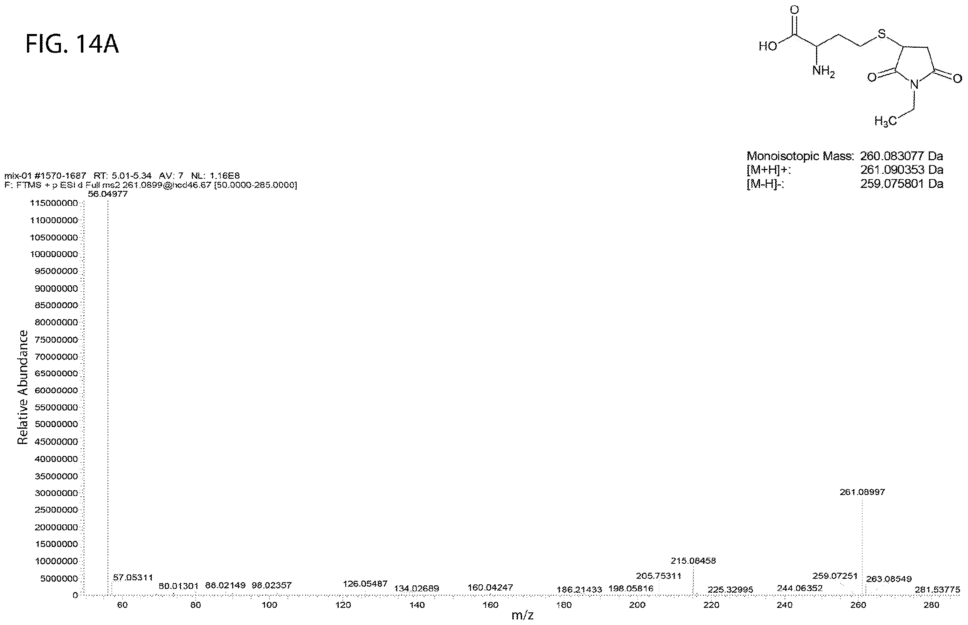

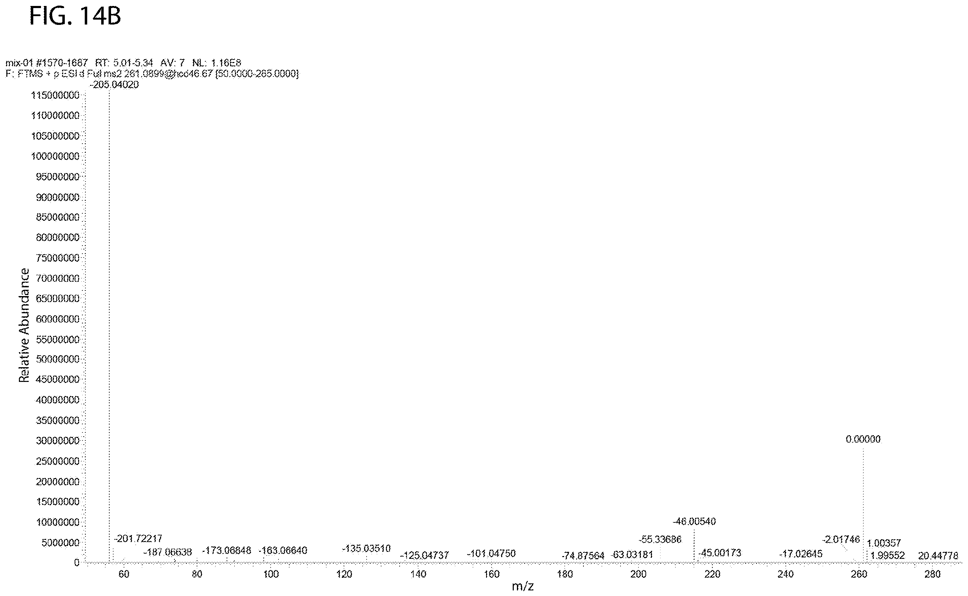

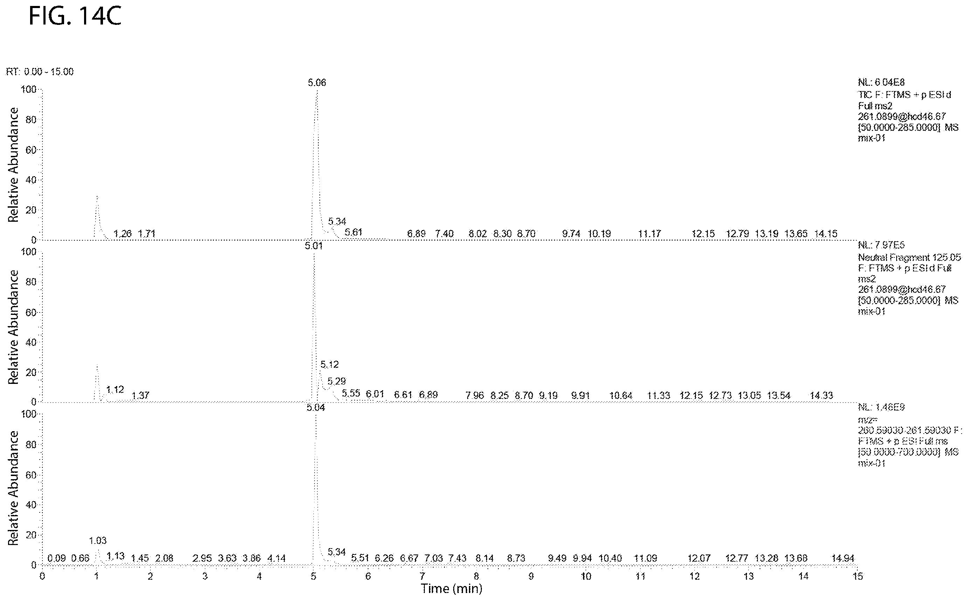

The results are shown in Figure 14.

### Advantages

The main advantages of the method according to the invention are as follows:
- it is the first diagnostic method capable of performing a multiresidual (ppb microg/l) measurement of an extended panel of analytes (amino acids and dipeptide or tripeptide derivatives, short-chain organic acids and modified nucleotides), with a single instrument, significantly reducing the workflow in the laboratory;
- it is the first diagnostic method capable of simultaneously quantifying multiple analytes, which are only clinically relevant for many pathological conditions if they are available in panels rather than individually;
- for some specific analytes, which can be marked by our method, e.g. REDOX PAIRS (homocysteine/homocystine, cysteine/cystine, glutathione/glutathione disulphide) and cysteine sulphate, it is not possible with the methods currently in use to obtain accurate measurements, or to make quantitative analyses;
- for some specific analytes, such as homocysteine lactone and modified nucleotides, it is not possible to have a measurement with any instrument;
- in general, for all measurable analytes, the accuracy of the method according to the invention is higher, both in terms of sensitivity and specificity, than the diagnostic methods currently in use;
- the method according to the invention is faster than current methods used for single analyte categories. In particular, it allows the entire panel to be marked in less than 30 minutes, whereas current methods take more than 2.5 hours.
- no need for additional costs or purchase of instrumentations other than those already in use in the laboratories. In fact, the method according to the invention makes use of a series of reagents and instruments with which laboratories for Level II analyses are provided, but which are not used for this purpose.
- The other multiresidual measurements (ppb microg/l) for the same analytes available in the laboratory envisage not only more passages and longer times, but also less accuracy.
- The advantage of the method according to the invention over GC-MS (the method of choice for the analysis of organic acids) is that a quantitative analysis is possible and not only a semi-quantitative or qualitative analysis.

Even compared to HPLC with fluorimetric detection and post-column derivatisation with minidrin (the method of choice for sulphur amino acids), the method according to the invention is quantitatively and generally superior in specificity from a technical point of view.

## Claims

1. A multiresidual method for detecting and/or quantifying at least one amino acid or derivative thereof, at least one organic acid, and/or at least one modified nucleotide,
in a sample of biological liquid or circulating cells, comprising the steps of:
a) treating the sample with an extraction mixture at room temperature, preferably refrigerated at a temperature lower than -20°C comprising i) a mixture of one or more organic solvents having final polarity index between 3 and 6, ii) a strong acid_in an amount sufficient for the extraction mixture to have a normality from 0.005 to 0.025 N or a weak acid with ka in the range between 3.5 x 10-7 and 7.0 x 10-3 with a final concentration in the extraction mixture from 5 to 30 mM, wherein the extraction mixture comprises:
- acetonitrile, dichloromethane and formic acid; or
- acetonitrile and hydrochloric acid; or
- acetone and formic acid; or
- methanol and formic acid; or
- acetonitrile and formic acid;
- acetonitrile, methanol and hydrochloric acid;
b) performing a hydrophilic interaction liquid chromatography (HILIC) on the sample treated in step a);
c) performing an analysis by tandem mass spectrometry on the sample obtained in step b) for detecting and/or quantifying the at least one amino acid or derivative thereof, the at least one organic acid, and/or the at least one modified nucleotide.

2. The method according to Claim 1, wherein the extraction mixture comprises:
- acetonitrile (69% v/v), dichloromethane (30% v/v) and formic acid (1% v/v); or
- acetonitrile and hydrochloric acid (0.015 normal); or
- acetone (99.5% v/v) and formic acid (0.5% v/v); or
- methanol (99% v/v) and formic acid (1% v/v); or
- acetonitrile and formic acid (0.2% v/v);
- acetonitrile, methanol and hydrochloric acid (0.05 normal);
- acetonitrile and methanol (50% v/v).

3. The method according to Claim 1 or 2, wherein step a) is preceded by a step of treating the sample with a solution of water, a low-concentration organic solvent and a substance of the group of N-substituted Imides with at least one unsaturation in alpha position with respect to one of the acyl functions, of organic acids with C4 to C10 chain.

4. The method according to Claim 3, wherein the substance of the group of N-substituted Imides is N-ethylmaleimide (NEM) or N-methylmaleimide (NMM).

5. The method according to Claim 4, wherein the N-ethylmaleimide (NEM).

6. The method according to any of the preceding Claims, wherein at least one amino acid or derivative thereof, at least one organic acid, and at least one modified nucleotide are detected and/or quantified.

7. The method according to any of the preceding Claims, wherein the sample is biological liquid and the biological liquid selected from the group consisting of plasma, urine, saliva, sweat, CSF, amniotic fluid or whole blood.

8. The method according to any of Claims 1 to 6, wherein the sample consists of circulating cells and the circulating cells are PBMC (peripheral blood mononuclear cells) monocytes.

9. The method according to any of the preceding Claims, wherein the extraction mixture is refrigerated:
- from -95°C to -70°C if the extraction mixture is preserved for a time longer than or equal to 6 months;
- from -25°C to -15°C if the extraction mixture is preserved for a time from 2 months to 6 months;
- from -30°C to -20°C if the extraction mixture is prepared for immediate use.

10. The method according to any of the preceding Claims, wherein the at least one organic acid is a short chain C2-C8 organic acid.

11. The method according to any of the preceding Claims, wherein:
- the at least one amino acid or derivative thereof is selected from the group consisting of phosphoserine, threonine, serine, glutamine, glycine, alanine, cysteine, valine, cystine, methionine, methionine sulfone, methionine sulfoxide, formylmethionine, cystathionine, isoleucine, leucine, norleucine, tyrosine, β-alanine, phenylalanine, homocysteine, homocystine, lysine, ornithine, histidine, 1-methylhistidine, 3-methylhistidine, anserine, arginine, proline, citrulline, glutathione, glutathione disulphide, cysteine sulphide, N-acetylcysteine, taurine, Selenium-methionine, phosphoethanolamine, homocitrulline, sarcosine, asparagine, carnosine, hydroxyproline, hydroxylisine, homocysteine lactone, cysteine homocysteine, homoglutathione, aminoethylecysteine, tryptophan, selenocysteine;
- the at least one organic acid is selected from the group consisting of cysteic acid, pyruvic acid, lactic acid, lipoic acid, α-aminobutyric acid, γ-aminobutyric acid, glutamic acid, aspartic acid, aminoadipic acid, argininosuccinic acid, sulfhydric acid; and
- the at least one modified nucleotide is selected from the group consisting of s-adenosylmethionine, s-adenosylhomocysteine and acetylCoA.

12. The method according to any of the preceding Claims, wherein the hydrophilic interaction liquid chromatography (HILIC) is performed by means of a step A and a step B between which there is a pH gradient from 2.5 to 7.5 and an ionic strength gradient from 15 mM to 200 mM such as to allow the separation of the analytes with a single stationary step.

13. The method according to any of the preceding Claims, wherein the hydrophilic interaction liquid chromatography (HILIC) is performed by means of a step A with water, preferably R = 18 MΩ 100% v/v and NH₄COOH, preferably 10 mM followed by a step B with acetonitrile, preferably MS grade 95% v/v and water, preferably R = 18 MΩ 5% v/v and NH₄COOH, preferably 10 mM.

14. The method according to any of the preceding Claims, wherein the analysis by mass tandem spectrometry is performed with the following parameters Q1 and Q3:
| **Substance** | **Q1** | **Q3** |
|---|---|---|
| Alanine | 44.1 | 72.1 |
| Aminoadipic acid | 98.1 | 144.1 |
| Aminobutyric acid | 41.1 | 58.1 |
| Aminoisobutyric acid | 57.1 | 86.1 |
| Hydroxyproline | 68.1 | 86.1 |
| Phosphoserine | 70.1 | 88.1 |
| Phosphoethanolamine | 44.1 | |
| Arginine | 70.1 | 116.1 |
| Hystidine | 110.1 | 83.1 |
| Lysine | 84.1 | 130.1 |
| Aspartic acid | 74.1 | 88.1 |
| Asparagine | 74.1 | 87.1 |
| Glutamine | 84.2 | 130.1 |
| Tryptophan | 146.1 | 188.1 |
| Argininosuccinic acid | 70.1 | 116.1 |
| Anserine | 109.1 | |
| Carnosine | 110.1 | 210.1 |
| Ethanolamine | 44.1 | |
| Hydroxylisine | 82.2 | 128.1 |
| Ornitine | 70.1 | 116.1 |
| Phenylalanine | 120.1 | 103.1 |
| Proline | 70.1 | 43 |
| Leucine | 86.1 | 43.1 |
| Isoleucine | 86.1 | 69.1 |
| Alloisoleucine | 69.1 | 86.1 |
| Homocitrulline | 127.1 | 173.1 |
| Citrulline | 70.1 | 159.1 |
| Sarcosine | 44.1 | |
| Threonine | 74.1 | 102.1 |
| Tyrosine | 136.1 | 165.1 |
| Valine | 72.1 | 55.1 |
| Lipoic acid | 205 | 171 |
| | 205 | 127.1 |
| | 205 | 93 |
| Methionine sulfoxide | 164 | 63 |
| | 164 | 100 |
| | 164 | 149 |
| | 166 | 74 |
| | 166 | 102 |
| | 166 | 149 |
| Cysteine_NEM | 247 | 158 |
| | 247 | 184 |
| | 247 | 230 |
| | 247 | 212 |
| N-acetylcysteine_NEM | 289 | 243 |
| | 289 | 201 |
| | 289 | 158.2 |
| Methionine SO2 | 180 | 79 |
| | 180 | 64 |
| Cysteic acid | 168 | 151 |
| | 168 | 81 |
| | 168 | 71 |
| Glycine | 74 | 45 |
| | 74 | 58 |
| Glutamic acid | 146 | 102 |
| | 146 | 128 |
| Methionine | 150 | 133 |
| | 150 | 104 |
| S-Adenosilhomocysteine | 383.2 | 134 |
| | 383.2 | 188 |
| | 383.2 | 248 |
| | 385 | 136 |
| | 385 | 250 |
| | 385 | 88 |
| Pyruvic acid | 87 | 43 |
| | 87 | 59 |
| Taurine | 124 | 80 |
| | 124 | 107 |
| Glutathione disulfide | 613 | 355 |
| | 613 | 484 |
| | 613 | 409 |
| | 613 | 538 |
| | 613 | 595 |
| | 611.3 | 306 |
| | 611.3 | 272.3 |
| | 611.3 | 254 |
| | 611.3 | 338 |
| | 611.3 | 143 |
| Glutathione_NEM | 431.1 | 306.3 |
| | 431.1 | 253.8 |
| | 431.1 | 288.2 |
| | 431.1 | 179 |
| | 431.1 | 272.2 |
| | 431.1 | 304.3 |
| | 431.1 | 286.9 |
| | 431.1 | 358.2 |
| | 431.1 | 201 |
| | 431.1 | 211.8 |
| Cysteine Sulfate | 200.3 | 136.1 |
| | 200.3 | 81 |
| | 200.3 | 74 |
| | 200.3 | 120 |
| N-formylmethionine | 176 | 128.1 |
| | 176 | 98 |
| | 176 | 84 |
| S-Adenosilmethionine | 399.3 | 298.1 |
| | 399.3 | 250.2 |
| | 399.3 | 264 |
| Serine | 103.9 | 74 |
| | 103.9 | 56 |
| | 103.9 | 42 |
| Cystathionine | 221 | 134 |
| | 221 | 120 |
| | 221 | 86 |
| Homocysteine-NEM | 261.1 | 215 |
| | 261.1 | 244 |
| Aminoethylcysteine | 165 | 148 |
| | 165 | 120 |
| Homocysteine | 267 | 132 |
| | 267 | 72 |
| | 267 | 115 |
| | 267 | 88 |
| Homoglutathione_NEM | 447.6 | 319 |
| | 447.6 | 301.3 |
| | 447.6 | 200.8 |
| | 447.6 | 358.1 |
| | 445.5 | 157.1 |
| | 445.5 | 286.3 |
| | 445.5 | 174 |
| | 445.5 | 196 |
| | 445.5 | 268.3 |
| | 445.5 | 301.9 |
| Selenomethionine | 197.1 | 95 |
| | 197.1 | 107 |
| | 197.1 | 122 |
| Cysteine | 241.2 | 120 |
| | 241.2 | 122 |
| | 241.2 | 152 |
| | 241.2 | 195 |
| | 241.2 | 223 |
| Homocysteine NMM | 247.1 | 215 |
| | 247.1 | 244 |

## Patentansprüche

1. Multiresiduales Verfahren zum Nachweis und/oder zur Quantifizierung mindestens einer Aminosäure oder eines Derivats davon, mindestens einer organischen Säure und/oder mindestens eines modifizierten Nukleotids,
in einer Probe von biologischer Flüssigkeit oder zirkulierenden Zellen, umfassend die folgenden Schritte:
a) Behandeln der Probe mit einem Extraktionsgemisch bei Raumtemperatur, vorzugsweise gekühlt bei einer Temperatur von weniger als -20°C, umfassend i) ein Gemisch aus einem oder mehreren organischen Lösungsmitteln mit einem Endpolaritätsindex zwischen 3 und 6, ii) eine starke Säure in einer Menge, die ausreicht, damit das Extraktionsgemisch eine Normalität von 0,005 bis 0,025 N aufweist, oder eine schwache Säure mit ka im Bereich zwischen 3,5 x 10-7 und 7,0 x 10-3 mit einer Endkonzentration im Extraktionsgemisch von 5 bis 30 mM, wobei das Extraktionsgemisch umfasst:
- Acetonitril, Dichlormethan und Ameisensäure; oder
- Acetonitril und Salzsäure; oder
- Aceton und Ameisensäure; oder
- Methanol und Ameisensäure; oder
- Acetonitril und Ameisensäure;
- Acetonitril, Methanol und Salzsäure;
b) Durchführen einer hydrophilen Interaktionschromatographie (HILIC) an der in Schritt a) behandelten Probe;
c) Durchführen einer Analyse durch Tandem-Massenspektrometrie an der in Schritt b) erhaltenen Probe zum Nachweis und/oder zur Quantifizierung mindestens einer Aminosäure oder eines Derivats davon, der mindestens einen organischen Säure und/oder des mindestens einen modifizierten Nukleotids.

2. Verfahren nach Anspruch 1, wobei das Extraktionsgemisch umfasst:
- Acetonitril (69% v/v), Dichlormethan (30% v/v) und Ameisensäure (1% v/v); oder
- Acetonitril und Salzsäure (0,015 normal); oder
- Aceton (99,5% v/v) und Ameisensäure (0,5% v/v); oder
- Methanol (99% v/v) und Ameisensäure (1% v/v); oder
- Acetonitril und Ameisensäure (0,2 % v/v);
- Acetonitril, Methanol und Salzsäure (0,05 normal);
- Acetonitril und Methanol (50% v/v).

3. Verfahren nach Anspruch 1 oder 2, **dadurch gekennzeichnet, dass** dem Schritt a) ein Schritt zur Behandlung der Probe mit einer Lösung aus Wasser, einem niedrig konzentrierten organischen Lösungsmittel und einer Substanz aus der Gruppe der N-substituierten Imide mit mindestens einer Ungesättigtheit in alpha-Position in Bezug auf eine der Acylfunktionen, von organischen Säuren mit C4-bis C10-Kette vorausgeht.

4. Verfahren nach Anspruch 3, wobei die Substanz aus der Gruppe der N-substituierten Imide N-Ethylmaleimid (NEM) oder N-Methylmaleimid (NMM) ist.

5. Verfahren nach Anspruch 4, wobei das N-Ethylmaleimid (NEM).

6. Verfahren nach einem der vorhergehenden Ansprüche, wobei mindestens eine Aminosäure oder ein Derivat davon, mindestens eine organische Säure und mindestens ein modifiziertes Nukleotid nachgewiesen und/oder quantifiziert werden.

7. Verfahren nach einem der vorhergehenden Ansprüche, wobei die Probe eine biologische Flüssigkeit ist und die biologische Flüssigkeit aus der Gruppe bestehend aus Plasma, Urin, Speichel, Schweiß, GRF, Fruchtwasser oder Vollblut ausgewählt ist.

8. Verfahren nach einem der Ansprüche 1 bis 6, wobei die Probe aus zirkulierenden Zellen besteht und die zirkulierenden Zellen PBMC (Periphere mononukleäre Blut-Zellen)-Monozyten sind.

9. Verfahren nach einem der vorhergehenden Ansprüche, wobei das Extraktionsgemisch gekühlt wird:
- von -95°C auf -70°C, wenn das Extraktionsgemisch für eine Zeit länger als oder gleich 6 Monate aufbewahrt wird;
- von -25°C bis -15°C, wenn das Extraktionsgemisch für eine Zeit von 2 Monaten bis 6 Monate aufbewahrt wird;
- von -30°C auf -20°C, wenn das Extraktionsgemisch zur sofortigen Verwendung vorbereitet wird.

10. Verfahren nach einem der vorhergehenden Ansprüche, wobei die mindestens eine organische Säure eine kurzkettige organische C2-C8-Säure ist.

11. Verfahren nach einem der vorhergehenden Ansprüche, wobei:
- die mindestens eine Aminosäure oder Derivat davon ausgewählt ist aus der Gruppe bestehend aus Phosphoserin, Threonin, Serin, Glutamin, Glycin, Alanin, Cystein, Valin, Cystin, Methionin, Methioninsulfon, Methioninsulfoxid, Formylmethionin, Cystathionin, Isoleucin, Leucin, Norleucin, Tyrosin, β-Alanin, Phenylalanin, Homocystein, Homocystin, Lysin, Ornithin, Histidin, 1-Methylhistidin, 3-Methylhistidin, Anserin, Arginin, Prolin, Citrullin, Glutathion, Glutathiondisulfid, Cysteinsulfid, N-Acetylcystein, Taurin, Selen-Methionin, Phosphoethanolamin, Homocitrullin, Sarkosin, Asparagin, Carnosin, Hydroxyprolin, Hydroxylisin, Homocysteinlacton, Cysteinhomocystein, Homoglutathion, Aminoethylecystein, Tryptophan, Selenocystein;
- die mindestens eine organische Säure ausgewählt ist aus der Gruppe bestehend aus Cysteinsäure, Brenztraubensäure, Milchsäure, Liponsäure, α-Aminobuttersäure, γ-Aminobuttersäure, Glutaminsäure, Asparaginsäure, Aminoadipinsäure, Argininobernsteinsäure, Schwefelsäure; und
- das mindestens eine modifizierte Nukleotid ausgewählt ist aus der Gruppe bestehend aus s-Adenosylmethionin, s-Adenosylhomocystein und AcetylCoA.

12. Verfahren nach einem der vorhergehenden Ansprüche, wobei die hydrophile Interaktionschromatographie (HILIC) mittels eines Schritts A und eines Schritts B durchgeführt wird, zwischen denen ein pH-Gradient von 2,5 bis 7,5 und ein Ionenstärke-Gradient von 15 mM bis 200 mM besteht, so dass die Trennung der Analyten mit einem einzigen stationären Schritt möglich ist.

13. Verfahren nach einem der vorhergehenden Ansprüche, **dadurch gekennzeichnet, dass** die hydrophile Interaktionschromatographie (HILIC) mittels eines Schritts A mit Wasser, vorzugsweise R = 18 MΩ 100% v/v und NH₄COOH, vorzugsweise 10 mM, gefolgt von einem Schritt B mit Acetonitril, vorzugsweise MS grade 95% v/v und Wasser, vorzugsweise R = 18 MΩ 5% v/v und NH₄COOH, vorzugsweise 10 mM, durchgeführt wird.

14. Verfahren nach einem der vorhergehenden Ansprüche, wobei die Analyse mittels Tandem-Massenspektrometrie mit den folgenden Parametern Q1 und Q3 durchgeführt wird:
| **Substanz** | **Q1** | **Q3** |
|---|---|---|
| Alanin | 44,1 | 72,1 |
| Aminoadipinsäure | 98,1 | 144,1 |
| Aminobuttersäure | 41,1 | 58,1 |
| Aminoisobuttersäure | 57,1 | 86,1 |
| Hydroxyprolin | 68,1 | 86,1 |
| Phosphoserin | 70, 1 | 88,1 |
| Phosphoethanolamin | 44,1 | |
| Arginin | 70, 1 | 116,1 |
| Hystidin | 110,1 | 83,1 |
| Lysin | 84,1 | 130,1 |
| Asparaginsäure | 74,1 | 88,1 |
| Asparagin | 74,1 | 87,1 |
| Glutamin | 84,2 | 130,1 |
| Tryptophan | 146,1 | 188,1 |
| Argininobernsteinsäure | 70, 1 | 116,1 |
| Anserin | 109,1 | |
| Carnosin | 110,1 | 210,1 |
| Ethanolamin | 44,1 | |
| Hydroxylisin | 82,2 | 128,1 |
| Ornitin | 70, 1 | 116,1 |
| Phenylalanin | 120,1 | 103,1 |
| Praline | 70, 1 | 43 |
| Leucin | 86,1 | 43,1 |
| Isoleucin | 86,1 | 69,1 |
| Alloisoleucin | 69,1 | 86,1 |
| Homocitrullin | 127,1 | 173,1 |
| Citrullin | 70, 1 | 159,1 |
| Sarkosin | 44,1 | |
| Threonin | 74,1 | 102,1 |
| Tyrosin | 136,1 | 165,1 |
| Valin | 72,1 | 55,1 |
| Liponsäure | 205 | 171 |
| | 205 | 127,1 |
| | 205 | 93 |
| Methioninsulfoxid | 164 | 63 |
| | 164 | 100 |
| | 164 | 149 |
| | 166 | 74 |
| | 166 | 102 |
| | 166 | 149 |
| Zystein_NEM | 247 | 158 |
| | 247 | 184 |
| | 247 | 230 |
| | 247 | 212 |
| N-Acetylcystein_NEM | 289 | 243 |
| | 289 | 201 |
| | 289 | 158,2 |
| Methionin SO2 | 180 | 79 |
| | 180 | 64 |
| Zystensäure | 168 | 151 |
| | 168 | 81 |
| | 168 | 71 |
| Glycin | 74 | 45 |
| | 74 | 58 |
| Glutaminsäure | 146 | 102 |
| | 146 | 128 |
| Methionin | 150 | 133 |
| | 150 | 104 |
| S-Adenosilhomocystein | 383,2 | 134 |
| | 383,2 | 188 |
| | 383,2 | 248 |
| | 385 | 136 |
| | 385 | 250 |
| | 385 | 88 |
| Brenztraubensäure | 87 | 43 |
| | 87 | 59 |
| Taurin | 124 | 80 |
| | 124 | 107 |
| Glutathion-Disulfid | 613 | 355 |
| | 613 | 484 |
| | 613 | 409 |
| | 613 | 538 |
| | 613 | 595 |
| | 611,3 | 306 |
| | 611,3 | 272,3 |
| | 611,3 | 254 |
| | 611,3 | 338 |
| | 611,3 | 143 |
| Glutathion_NEM | 431,1 | 306,3 |
| | 431,1 | 253,8 |
| | 431,1 | 288,2 |
| | 431,1 | 179 |
| | 431,1 | 272,2 |
| | 431,1 | 304,3 |
| | 431,1 | 286, 9 |
| | 431,1 | 358,2 |
| | 431,1 | 201 |
| | 431,1 | 211,8 |
| Cystein-Sulfat | 200,3 | 136,1 |
| | 200,3 | 81 |
| | 200,3 | 74 |
| | 200,3 | 120 |
| N-Formylmethionin | 176 | 128,1 |
| | 176 | 98 |
| | 176 | 84 |
| S-Adenosilmethionin | 399,3 | 298,1 |
| | 399,3 | 250,2 |
| | 399,3 | 264 |
| Serin | 103, 9 | 74 |
| | 103, 9 | 56 |
| | 103, 9 | 42 |
| Cystathionin | 221 | 134 |
| | 221 | 120 |
| | 221 | 86 |
| Homocystein-NEM | 261,1 | 215 |
| | 261,1 | 244 |
| Aminoethylcystein | 165 | 148 |
| | 165 | 120 |
| Homocystein | 267 | 132 |
| | 267 | 72 |
| | 267 | 115 |
| | 267 | 88 |
| Homoglutathion_NEM | 447, 6 | 319 |
| | 447, 6 | 301,3 |
| | 447, 6 | 200,8 |
| | 447, 6 | 358,1 |
| | 445,5 | 157,1 |
| | 445,5 | 286,3 |
| | 445,5 | 174 |
| | 445,5 | 196 |
| | 445,5 | 268,3 |
| | 445,5 | 301, 9 |
| Selenomethionin | 197,1 | 95 |
| | 197,1 | 107 |
| | 197,1 | 122 |
| Cystein | 241, 2 | 120 |
| | 241, 2 | 122 |
| | 241, 2 | 152 |
| | 241, 2 | 195 |
| | 241, 2 | 223 |
| Homocystein NMM | 247,1 | 215 |
| | 247,1 | 244 |

## Revendications

1. Procédé multirésiduel de détection et/ou de quantification d'au moins un acide aminé ou de son dérivé, d'au moins un acide organique et/ou d'au moins un nucléotide modifié,
dans un échantillon de liquide biologique ou de cellules circulantes, comprenant les étapes suivantes :
a) le traitement de l'échantillon avec un mélange d'extraction à température ambiante, de préférence réfrigéré à une température inférieure à - 20°C, comprenant i) un mélange d'un ou plusieurs solvants organiques ayant un indice de polarité final compris entre 3 et 6, ii) un acide fort dans une quantité suffisante pour que le mélange d'extraction ait une normalité comprise entre 0,005 et 0,025 N ou un acide faible ayant un ka compris entre 3,5 x 10-7 et 7,0 x 10-3 avec une concentration finale dans le mélange d'extraction comprise entre 5 et 30 mM, le mélange d'extraction comprenant :
- de l'acétonitrile, du dichlorométhane et de l'acide formique ; ou
- de l'acétonitrile et de l'acide chlorhydrique ; ou
- de l'acétone et de l'acide formique ; ou
- du méthanol et de l'acide formique ; ou
- de l'acétonitrile et de l'acide formique ;
- de l'acétonitrile, du méthanol et de l'acide chlorhydrique ;
b) la réalisation d'une chromatographie liquide à interaction hydrophile (HILIC) sur l'échantillon traité à l'étape a) ;
c) la réalisation d'une analyse par spectrométrie de masse en tandem sur l'échantillon obtenu à l'étape b) pour détecter et/ou quantifier l'au moins un acide aminé ou son dérivé, l'au moins un acide organique et/ou l'au moins un nucléotide modifié.

2. Procédé selon la revendication 1, le mélange d'extraction comprenant :
- de l'acétonitrile (69 % v/v), du dichlorométhane (30 % v/v) et de l'acide formique (1 % v/v) ; ou
- de l'acétonitrile et de l'acide chlorhydrique (normalité 0,015) ; ou
- de l'acétone (99,5 % v/v) et de l'acide formique (0,5 % v/v) ; ou
- du méthanol (99 % v/v) et de l'acide formique (1 % v/v) ; ou
- de l'acétonitrile et de l'acide formique (0,2 % v/v) ;
- de l'acétonitrile, du méthanol et de l'acide chlorhydrique (normalité 0,05) ;
- de l'acétonitrile et du méthanol (50 % v/v).

3. Procédé selon la revendication 1 ou 2, l'étape a) étant précédée d'une étape de traitement de l'échantillon avec une solution d'eau, un solvant organique à faible concentration et une substance du groupe des imides N-substitués avec au moins une insaturation en position alpha par rapport à l'une des fonctions acyles, des acides organiques à chaîne C4 à C10.

4. Procédé selon la revendication 3, la substance du groupe des imides N-substitués étant le N-éthylmaléimide (NEM) ou le N-méthylmaléimide (NMM).

5. Procédé selon la revendication 4, où le N-éthylmaléimide (NEM).

6. Procédé selon l'une quelconque des revendications précédentes, au moins un acide aminé ou un dérivé de celui-ci, au moins un acide organique et au moins un nucléotide modifié étant détectés et/ou quantifiés.

7. Procédé selon l'une quelconque des revendications précédentes, l'échantillon étant un liquide biologique choisi dans le groupe constitué par le plasma, l'urine, la salive, la sueur, le LCR, le liquide amniotique ou le sang total.

8. Procédé selon l'une quelconque des revendications 1 à 6, l'échantillon étant constitué de cellules circulantes et les cellules circulantes sont des monocytes PBMC (cellules mononucléaires du sang périphérique).

9. Procédé selon l'une quelconque des revendications précédentes, le mélange d'extraction étant réfrigéré :
- de -95 à -70°C si le mélange d'extraction est conservé pendant une durée supérieure ou égale à 6 mois ;
- de -25 à -15°C si le mélange d'extraction est conservé pendant une période de 2 à 6 mois ;
- de -30 à -20°C si le mélange d'extraction est préparé pour une utilisation immédiate.

10. Procédé selon l'une quelconque des revendications précédentes, l'acide organique au moins étant un acide organique à chaîne courte en C2-C8.

11. Procédé selon l'une quelconque des revendications précédentes, où :
- l'acide aminé au moins ou son dérivé est choisi dans le groupe constitué par phosphosérine, thréonine, sérine, glutamine, glycine, alanine, cystéine, valine, cystine, méthionine, méthionine sulfone, méthionine sulfoxyde, formylméthionine, cystathionine, isoleucine, leucine, norleucine, tyrosine, β-alanine, phénylalanine, homocystéine, homocystine, lysine, ornithine, histidine, 1-méthylhistidine, 3-méthylhistidine, ansérine, arginine, proline, citrulline, glutathion, disulfure de glutathion, sulfure de cystéine, N-acétylcystéine, taurine, sélénium-méthionine, phosphoéthanolamine, homocitrulline, sarcosine, asparagine, carnosine, hydroxyproline, hydroxylisine, homocystéine lactone, cystéine homocystéine, homoglutathion, aminoéthylcystéine, tryptophane, sélénocystéine ;
- l'au moins un acide organique est choisi dans le groupe constitué par acide cystéique, acide pyruvique, acide lactique, acide lipoïque, acide α-aminobutyrique, acide γ-aminobutyrique, acide glutamique, acide aspartique, acide aminoadipique, acide argininosuccinique, acide sulfhydrique ; et
- l'au moins un nucléotide modifié est choisi dans le groupe constitué par s-adénosylméthionine, s-adénosylhomocystéine et l'acétylCoA.

12. Procédé selon l'une quelconque des revendications précédentes, la chromatographie liquide à interaction hydrophile (HILIC) étant réalisée au moyen d'une étape A et d'une étape B entre lesquelles il y a un gradient de pH de 2,5 à 7,5 et un gradient de force ionique de 15 à 200 mM, de manière à permettre la séparation des analytes par une seule étape stationnaire.

13. Procédé selon l'une quelconque des revendications précédentes, la chromatographie liquide à interaction hydrophile (HILIC) étant réalisée au moyen d'une étape A avec de l'eau, de préférence R = 18 MΩ à 100 % v/v et NH₄COOH, de préférence 10 mM, suivie d'une étape B avec de l'acétonitrile, de préférence de qualité MS à 95 % v/v et de l'eau, de préférence R = 18 MΩ à 5 % v/v et NH₄COOH, de préférence 10 mM.

14. Procédé selon l'une quelconque des revendications précédentes, l'analyse par spectrométrie de masse en tandem étant effectuée avec les paramètres Q1 et Q3 suivants :
| **Substance** | **Q1** | **Q3** |
|---|---|---|
| Alanine | 44,1 | 72,1l |
| Acide amino-adipique | 98,1 | 144,1 |
| Acide aminobutyrique | 41,1 | 58,1 |
| Acide amino-isobutyrique | 57,1 | 86,1 |
| Hydroxyproline | 68,1 | 86,1 |
| Phosphosérine | 70, 1 | 88,1 |
| Phosphoéthanolamine | 44,1 | |
| Arginine | 70, 1 | 116,1 |
| Hystidine | 110,1 | 83,1 |
| Lysine | 84,1 | 130,1 |
| Acide aspartique | 74,1 | 88,1 |
| Asparagine | 74,1 | 87,1 |
| Glutamine | 84,2 | 130,1 |
| Tryptophane | 146,1 | 188,1 |
| Acide argininosuccinique | 70, 1 | 116,1 |
| Ansérine | 109,1 | |
| Carnosine | 110,1 | 210,1 |
| Éthanolamine | 44,1 | |
| Hydroxylisine | 82,2 | 128,1 |
| Ornitine | 70, 1 | 116,1 |
| Phénylalanine | 120,1 | 103,1 |
| Praline | 70, 1 | 43 |
| Leucine | 86,1 | 43,1 |
| Isoleucine | 86,1 | 69,1 |
| Alloisoleucine | 69,1 | 86,1 |
| Homocitrulline | 127,1 | 173,1 |
| Citrulline | 70, 1 | 159,1 |
| Sarcosine | 44,1 | |
| Thréonine | 74,1 | 102,1 |
| Tyrosine | 136,1 | 165,1 |
| Valine | 72,1 | 55,1 |
| Acide lipoïque | 205 | 171 |
| | 205 | 127,1 |
| | 205 | 93 |
| Sulfoxyde de méthionine | 164 | 63 |
| | 164 | 100 |
| | 164 | 149 |
| | 166 | 74 |
| | 166 | 102 |
| | 166 | 149 |
| Cystéine_NEM | 247 | 158 |
| | 247 | 184 |
| | 247 | 230 |
| | 247 | 212 |
| N-acétylcystéine_NEM | 289 | 243 |
| | 289 | 201 |
| | 289 | 158,2 |
| Méthionine SO2 | 180 | 79 |
| | 180 | 64 |
| Acide cystéique | 168 | 151 |
| | 168 | 81 |
| | 168 | 71 |
| Glycine | 74 | 45 |
| | 74 | 58 |
| Acide glutamique | 146 | 102 |
| | 146 | 128 |
| Méthionine | 150 | 133 |
| | 150 | 104 |
| S-Adénosilhomocystéine | 383,2 | 134 |
| | 383,2 | 188 |
| | 383,2 | 248 |
| | 385 | 136 |
| | 385 | 250 |
| | 385 | 88 |
| Acide pyruvique | 87 | 43 |
| | 87 | 59 |
| Taurine | 124 | 80 |
| | 124 | 107 |
| Disulfure de glutathion | 613 | 355 |
| | 613 | 484 |
| | 613 | 409 |
| | 613 | 538 |
| | 613 | 595 |
| | 611,3 | 306 |
| | 611,3 | 272,3 |
| | 611,3 | 254 |
| | 611,3 | 338 |
| | 611,3 | 143 |
| Glutathion_NEM | 431,1 | 306,3 |
| | 431,1 | 253,8 |
| | 431,1 | 288,2 |
| | 431,1 | 179 |
| | 431,1 | 272,2 |
| | 431,1 | 304,3 |
| | 431,1 | 286, 9 |
| | 431,1 | 358,2 |
| | 431,1 | 201 |
| | 431,1 | 211,8 |
| Sulfate de cystéine | 200,3 | 136,1 |
| | 200,3 | 81 |
| | 200,3 | 74 |
| | 200,3 | 120 |
| N-formylméthionine | 176 | 128,1 |
| | 176 | 98 |
| | 176 | 84 |
| S-Adénosilméthionine | 399,3 | 298,1 |
| | 399,3 | 250,2 |
| | 399,3 | 264 |
| Sérine | 103, 9 | 74 |
| | 103, 9 | 56 |
| | 103, 9 | 42 |
| Cystathionine | 221 | 134 |
| | 221 | 120 |
| | 221 | 86 |
| Homocystéine-NEM | 261,1 | 215 |
| | 261,1 | 244 |
| Amino-éthylcystéine | 165 | 148 |
| | 165 | 120 |
| Homocystéine | 267 | 132 |
| | 267 | 72 |
| | 267 | 115 |
| | 267 | 88 |
| Homoglutathion_NEM | 447,6 | 319 |
| | 447,6 | 301,3 |
| | 447,6 | 200,8 |
| | 447,6 | 358,1 |
| | 445,5 | 157,1 |
| | 445,5 | 286,3 |
| | 445,5 | 174 |
| | 445,5 | 196 |
| | 445,5 | 268,3 |
| | 445,5 | 301,9 |
| Sélénométhionine | 197,1 | 95 |
| | 197,1 | 107 |
| | 197,1 | 122 |
| Cystéine | 241,2 | 120 |
| | 241,2 | 122 |
| | 241,2 | 152 |
| | 241,2 | 195 |
| | 241,2 | 223 |
| Homocystéine NMM | 247,1 | 215 |
| | 247,1 | 244 |
